# EUROPÄISCHE PATENTANMELDUNG

(11) **EP 4 772 731 A1**
(43) Veröffentlichungstag der Anmeldung: **08.07.2026**
(21) Anmeldenummer: 25223042.0
(22) Anmeldetag: 12.12.2025
(51) Int. Cl.: F01N 9/00

(54) **VERFAHREN ZUR ERMITTLUNG EINER ASCHEBELADUNG EINES PARTIKELFILTERS**

(30) Priorität: 03.01.2025 DE 102025100110
(71) Anmelder: Volkswagen Aktiengesellschaft, 38440 Wolfsburg (DE)
(72) Erfinder: Tzschentke, Matthias, 38440 Wolfsburg (DE); Kreuzig, Fabian, 38440 Wolfsburg (DE)

(57) **Zusammenfassung**

Die Erfindung betrifft ein Verfahren zur Ermittlung einer Aschebeladung eines Partikelfilters (36) in einer Abgasanlage (20) eines Verbrennungsmotors (10). Das Verfahren umfasst folgende Verfahrensschritte:
- Ermitteln eines Abgasgegendrucks (p_{R}) bei einem leeren, neuwertigen Partikelfilter (36) als Referenzwert (RW),
- Ermitteln eines Partikeleintrags in den Partikelfilter (36) aus Betriebsparametern des Verbrennungsmotors (10) durch ein Rußpartikelbildungsmodell,
- Ermitteln eines Eintrags von Ölasche (69) aus einem ermittelten Ölverbrauch des Verbrennungsmotors (10) durch ein Aschemodell,
- Regeneration des Partikelfilters (36), wenn eine Notwendigkeit zur Regeneration des Partikelfilters (36) durch einen gemessenen Differenzdruck (Δp) über den Partikelfilter (36) und/oder durch ein Beladungsmodell des Partikelfilters (36) erkannt wird,
- Anpassen des Referenzwerts (RW) für den Abgasgegendruck (p_{R}) für den leeren Partikelfilter in einem Differenzdruckmodell und/oder einem Beladungsmodell für den Partikelfilter (36) in Abhängigkeit von dem ermittelten Ölverbrauch des Verbrennungsmotors (10).

Die Erfindung betrifft ferner einen Computerprogrammcode (76), ein Steuergerät (70) sowie einen Verbrennungsmotor (10) zur Durchführung eines solchen Verfahrens.

## Beschreibung

Die Erfindung betrifft ein Verfahren zur Ermittlung einer Aschebeladung eines Partikelfilters in der Abgasanlage eines Verbrennungsmotors, einen Computerprogrammcode sowie ein Steuergerät zur Durchführung eines solchen Verfahrens.

Die aktuelle und eine zukünftig immer schärfer werdende Abgasgesetzgebung stellt hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Verbrennungsmotoren werden zur Abgasnachbehandlung Partikelfilter eingesetzt, welche die Partikel aus dem Abgasstrom des Verbrennungsmotors herausfiltern. Solche Partikelfilter werden in der Regel periodisch regeneriert, wenn eine Rußbeladung des Partikelfilters einen gewissen Schwellenwert erreicht hat. Ein solcher Schwellenwert kann insbesondere durch eine Differenzdruckmessung über den Partikelfilter und/oder durch ein Rußbeladungsmodell für den Partikelfilter ermittelt werden. Bei Ottomotoren erfolgt die Abgasreinigung in bekannter Weise über einen Drei-Wege-Katalysator sowie dem Drei-Wege-Katalysator vor- und nachgeschaltete weitere Katalysatoren und einen Partikelfilter. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen.

Aus der EP 1 387 051 A1 ist ein Verfahren zum Betreiben eines Partikelfiltersystems in der Abgasanlage eines Verbrennungsmotors bekannt. Dabei wird der Partikelfilter vom Abgas eines selbstzündenden Verbrennungsmotors durchströmt, mit Ruß beladen und in Abhängigkeit von vorgegebenen Rußbeladungszuständen des Partikelfilters regeneriert. Der Betrieb des Partikelfiltersystems wird dadurch weiter optimiert, dass zusätzlich zu der Rußbeladung des Partikelfilters die Beladung von in dem Partikelfilter abgelagerten nicht regenerierbaren Bestandteilen des Abgases ermittelt und der Partikelfilter nach einer bestimmten Beladung gewartet wird.

Die CN 114 941 564 A beschreibt ein Verfahren zur Abgasnachbehandlung eines Verbrennungsmotors mit einem Partikelfilter in der Abgasanlage. Dabei wird die Einlasstemperatur eines Dieselpartikelfilters und die Aschebeladung des Partikelfilters ermittelt, wobei ein Filterungseffizienz-Steuermodus gestartet wird, wenn ein oberer Grenzwert für die Beladung des Partikelfilters überschritten wird, sodass der Aschegehalt des Partikelfilters schnell akkumuliert wird und die Kraftstoffverbrauchsrate des Motors erhöht wird.

Die JP 2008 297 912 A beschreibt einen Verbrennungsmotor mit einer Abgasanlage, in welcher ein Dieselpartikelfilter zum Auffangen der vom Verbrennungsmotor ausgestoßenen Partikel angeordnet ist. In dem Dieselpartikelfilter wird zusätzlich auch die Asche, die durch eine Verbrennung des Schmieröls des Verbrennungsmotors entsteht, aufgefangen.

Die US 6 622 480 B2 beschreibt eine Dieselpartikelfiltereinheit sowie ein Verfahren zur Steuerung der Regeration der Dieselpartikelfiltereinheit. Die Dieselpartikelfiltereinheit umfasst einen Filter zum Auffangen von Partikeln im Abgas eines Motors und eine Regenerationssteuerungseinrichtung, die den Beginn des Regenerationsvorgangs des Filters entsprechend einem Vergleich zwischen dem von Abgasdrucksensoren gemessenen Wert und einem vorgegebenen Abgasdruckbeurteilungswert beurteilt. Die Regenerationssteuerungseinrichtung ist so konfiguriert, dass sie die angesammelte Menge an Asche, die in das Abgas ausgetreten ist und sich in dem Filter angesammelt hat, schätzt und den Abgasdruckbeurteilungswert korrigiert, um den Beginn des Regenerationsvorgangs auf der Grundlage dessen zu beurteilen.

Ferner ist aus der US 7 147 693 B2 eine Vorrichtung zur Reinigung von Motorabgasen bekannt. Die Reinigungsvorrichtung hat einen Filter, der im Abgas eines Motors enthaltene Partikel abfängt; einen Differenzdruckerfassungssensor, der einen Differenzdruck des Filters erfasst; einen Sensor, der einen Motorbetriebszustand erfasst und einen Mikrocomputer.

Der Erfindung liegt nun die Aufgabe zugrunde, ein Aschemodell für einen Partikelfilter zu verbessern, den Einfluss von Ruß und Asche auf den Differenzdruck über den Partikelfilter zu differenzieren und so unnötige Regenerationsvorgänge für den Partikelfilter zu vermeiden.

Die Aufgabe wird durch ein Verfahren zur Ermittlung einer Aschebeladung eines Partikelfilters in einer Abgasanlage eines Verbrennungsmotors gelöst. Erfindungsgemäß umfasst das Verfahren zumindest folgende Verfahrensschritte:
- Ermitteln eines Abgasgegendrucks bei einem leeren, neuwertigen Partikelfilter als Referenzwert,
- Ermitteln eines Partikeleintrags aus Betriebsparametern des Verbrennungsmotors durch ein Rußpartikelbildungsmodell,
- Ermitteln eines Eintrags von Ölasche aus einem ermittelten Ölverbrauch des Verbrennungsmotors,
- Regeneration des Partikelfilters, wenn eine Notwendigkeit zur Regeneration des Partikelfilters durch einen gemessenen Differenzdruck über den Partikelfilter und/oder durch ein Beladungsmodell des Partikelfilters erkannt wird,
- Anpassen des Referenzwerts für den Abgasgegendruck für den rußleeren Partikelfilter in einem Differenzdruckmodell und/oder einem Beladungsmodell für den Partikelfilter in Abhängigkeit von dem ermittelten Ölverbrauch des Verbrennungsmotors.

Dabei weist die Abgasanlage vorzugsweise einen Differenzdrucksensor zur Erfassung des Differenzdrucks über den Partikelfilter auf, um eine Beladung des Partikelfilters zu überwachen.

Bei der Ermittlung des Abgasgegendrucks bei einem leeren, neuwertigen Partikelfilter liegt die Ruß- und Aschebeladung bei Null, es sind also weder Rußpartikel noch Asche im Partikelfilter vorhanden. Bei der anschließenden Ermittlung eines Partikeleintrags aus Betriebsparametern des Verbrennungsmotors durch ein Rußbeladungmodell liegt die Rußbeladung bei größer Null, während in dem Rußpartikelbildungsmodell weiterhin davon ausgegangen wird, dass keine Ölasche im Partikelfilter vorhanden ist. Bei der Ermittlung des Eintrags von Ölasche aus dem ermittelten Ölverbrauch des Verbrennungsmotors steigt die Aschebeladung entsprechend von Ausgangswert Null mit dem Ölverbrauch auf denen Wert größer Null. Bei einer Regeneration des Partikelfilters wird davon ausgegangen, dass die Rußpartikel oxidiert werden, die Ölasche jedoch nicht weiter verbrannt werden kann und im Partikelfilter verbleibt.

Bei der Anpassung des Referenzwertes wird davon ausgegangen, dass die Rußbeladung nach der Regeneration des Partikelfilter bei nahezu Null liegt, und die Aschebeladung mit der Ölasche größer Null ist. Diese Aschebeladung wird während einer Regeneration des Partikelfilters nicht kleiner, da die Ölasche im Gegensatz zu den Rußpartikeln nicht weiter verbrennen kann. Der Referenzwertes für den Abgasgegendruck wird also nach jeder Regeneration des Partikelfilters höher liegen. Der Ruß ist jedes mal nach der Regeneration des Partikelfilters nahezu Null, die Aschemasse nimmt kontinuierlich über Motorbetriebsbauer und den damit zugrunde liegenden Ölverbrauch zu.

Unter einer Ermittlung der Rußbeladung eines Partikelfilters ist in diesem Zusammenhang eine Beladung des Partikelfilters zu verstehen, welche aus einer unvollständigen Verbrennung von Kraftstoff im Brennraum des Verbrennungsmotors resultiert und zumindest indirekt gemessen und/oder berechnet wird. Unter einem Partikelfilter ist eine Vorrichtung zur Filtration eines Abgases des Verbrennungsmotors zu verstehen, welche Feststoffe im Abgasstrom des Verbrennungsmotors aus diesem Abgasstrom herausfiltert. Unter einem Differenzdrucksensor ist in diesem Zusammenhang eine Sensorik zu verstehen, welche einen Druckunterschied über den Partikelfilter misst. Eine solche Messung des Differenzdrucks dient insbesondere einer Bestimmung der Rußbeladung des Partikelfilters und dient als Kriterium für eine Notwendigkeit zur Regeneration des Partikelfilters. Aus der Messung des Differenzdruckes über den Partikelfilter und einigen anschließenden Filterungen des Messsignals wird die Rußbeladung des Partikelfilters simuliert, im sogenannten Partikelfilter-Differenzdruckmodell. Unter einem Abgasgegendruck ist ein Druckanstieg in der Abgasanlage zu verstehen, welcher aus in der Abgasanlage angeordneten Komponenten, insbesondere einer Turbine eines Abgasturboladers und der Turbine nachgeschalteten Abgasnachbehandlungskomponenten resultiert. Unter einem Betriebsparameter des Verbrennungsmotors sind in diesem Zusammenhang unter anderem, aber nicht abschließend, die Drehzahl des Verbrennungsmotors, das Drehmoment, die Einspritzmenge, der Einspritzzeitpunkt, die Luftmenge, die Verbrennungstemperatur und der Brennraumdruck zu verstehen. Unter einem Rußpartikelbildungsmodell ist ein Rechenmodell zu verstehen, welches anhand der Betriebsparameter eine zu erwartende Rußbildung in den Brennräumen des Verbrennungsmotors ermittelt. Unter einer Ölasche sind Verbrennungsreste von verbranntem Motoröl zu verstehen die nicht weiter verbrannt werden können, und die den Abgasgegendruck über den Partikelfilter erhöhen. Durch einen linearen Zusammenhang zwischen Ölverbrauch und daraus entstehender Ascheablagerung im Partikelfilter kann ein Aschemodell die aktuelle Aschebeladung des Partikelfilters anzeigen. Unter einem Ölverbrauch ist eine quantitativ ermittelte Menge an Öl zu verstehen, welches dem Ölkreislauf des Verbrennungsmotors entzogen wird. Unter einem Beladungsmodell ist ein Modell zu verstehen, welches anhand des Rußpartikelbildungsmodells eine Rußbeladung des Partikelfilters ermittelt.

Das erfindungsgemäße Verfahren ermöglicht ein verbessertes Partikelfilter-Differenzdruckmodell für einen Partikelfilter, weil zusätzlich zu dem aus dem Kraftstoff stammenden Partikeleintrag auch ein aus dem Motoröl stammender Eintrag von Ölasche in den Partikelfilter berücksichtigt wird. Dabei wird ein Referenzwert, welcher einem leeren oder vollständig regenerierten Partikelfilter zugeordnet ist, in Abhängigkeit von dem Ölverbrauch und dem damit verbundenen Eintrag von Ölasche in den Partikelfilter angepasst. Dadurch kann verhindert werden, dass eine vermeintlich unvollständige Regeneration des Partikelfilters, welche aus einem zusätzlichen Abgasgegendruck durch den Ölascheeintrag resultiert, erkannt wird und in einem solchen Zustand des Partikelfilters keine weitere Regeneration eingeleitet wird.

Durch die in den abhängigen Ansprüchen aufgeführten zusätzlichen Merkmale sind vorteilhafte Ausgestaltungen und weitere Verbesserungen des im unabhängigen Anspruch genannten Verfahrens zur Ermittlung einer Rußbeladung eines Partikelfilters in der Abgasanlage eines Verbrennungsmotors möglich.

In bevorzugter Ausgestaltung der Erfindung ist vorgesehen, dass eine Ermittlung des Ölverbrauchs des Verbrennungsmotors über einen Ölstandsensor in einem Vorratsbehälter zur Bevorratung eines Öls zur Schmierung des Verbrennungsmotors erfolgt. Über einen Ölstandsensor kann auf einfache Art und Weise ein Ölstand in einem Vorratsbehälter zur Bevorratung von Öl gemessen werden. Aus dem Ölstand und einer nachgefüllten Ölmenge kann auf einfache Art und Weise ein Ölverbrauch des Verbrennungsmotors ermittelt werden. Aus diesem Ölverbrauch lässt sich der Eintrag von Ölasche in den Partikelfilter und eine daraus resultierende Erhöhung des Abgasgegendrucks ermitteln.

In weiterer bevorzugter Ausgestaltung der Erfindung ist vorgesehen, dass das Aschemodell für den Partikelfilter einen linearen Zusammenhang zwischen einem Ölverbrauch des Verbrennungsmotors und einem Eintrag von Ölasche in den Partikelfilter aufweist. Da bis auf eine Leckage davon auszugehen ist, dass das aus dem Ölkreislauf fehlende Öl in den Brennräumen des Verbrennungsmotors verbrennt, kann von einem linearen Zusammenhang zwischen dem Ölverbrauch des Verbrennungsmotors und dem Eintrag von Ölasche in den Partikelfilter ausgegangen werden.

In einer vorteilhaften Ausgestaltung des Verfahrens ist vorgesehen, dass das Differenzdruckmodell für den Partikelfilter einen unteren Referenzdruck für einen unbeladenen Partikelfilter und einen oberen Referenzdruck für eine Einleitung einer Regeneration des Partikelfilters aufweist. Dabei kann der untere Referenzdruck für einen leeren Partikelfilter, also einen Partikelfilter unmittelbar nach dem Einbau, ermittelt werden. Mit zunehmender Rußbeladung steigt der Abgasgegendruck, bis der obere Referenzdruck erreicht ist, welcher die Einleitung einer Regeneration des Partikelfilters auslöst. Diese Referenzdrücke können mit Korrekturfaktoren versehen werden, um eine Alterung des Partikelfilters und eine Erhöhung des Abgasgegendrucks durch eine Aschebeladung durch Ölverbrauch des Motors im Rahmen der Alterung des Partikelfilters zu berücksichtigen.

Besonders bevorzugt ist dabei, wenn der untere Referenzdruck in Abhängigkeit des ermittelten Ölverbrauchs des Verbrennungsmotors und/oder des ermittelten Eintrags von Ölasche in den Partikelfilter angepasst wird. Dadurch kann eine aus dem Eintrag von Ölasche resultierende Erhöhung des Abgasgegendruck berücksichtigt werden und das Partikelfilter-Differenzdruckmodell für den Partikelfilter entsprechend angepasst werden.

In einer vorteilhaften Ausgestaltung des Verfahrens ist vorgesehen, dass ein Ölverbrauch aus einer nachgefüllten Ölmenge bei einem Nachfüllvorgang oder einem Ölwechselvorgang des Öls des Verbrennungsmotors ermittelt wird. Dadurch kann bei einem Nachfüllvorgang auf einfache Art und Weise ein Ölverbrauch ermittelt werden. Bei einem Ölwechsel kann durch einfache Bilanzierung zwischen dem abgelassenen Öl und dem nachgefüllten Öl ein Ölverbrauch ermittelt werden. Aus dem ermittelten Ölverbrauch kann dann der Eintrag von Ölasche in den Partikelfilter ermittelt werden, sodass das Partikelfilter-Differenzdruckmodell für den Partikelfilter entsprechend angepasst werden kann.

Besonders bevorzugt ist dabei, wenn ein Nachfüllvorgang des Öls erkannt wird, wenn ein Motorhauben-Öffnungssensor ein Öffnen einer Motorhaube eines Kraftfahrzeugs zum Zwecke ines Nachfüllens des Öls detektiert. Da zum Nachfüllen von Öl ein Öffnen der Motorhaube notwendig ist, kann somit ein bevorstehender Nachfüllvorgang für das Öl erkannt und anschließend aus der Menge des nachgefüllten Öls ein Ölverbrauch kalkuliert werden.

Ein weiterer Teilaspekt der Erfindung betrifft einen Computerprogrammcode, welcher Befehle umfasst, die bei der Ausführung des Computerprogrammcodes durch einen Computer, insbesondere durch ein Steuergerät des Verbrennungsmotors, diesen Computer dazu veranlassen, ein in den vorhergehenden Abschnitten beschriebenes Verfahrens auszuführen. Durch einen solchen Computerprogrammcode kann auf einfache Art und Weise eine Durchführung eines solchen Verfahrens in einem Steuergerät des Verbrennungsmotors oder einen Computer in einer Werkstatt, welcher zu Analysezwecken mit einem Steuergerät des Kraftfahrzeugs verbunden wird, realisiert werden.

Ein weiterer Teilaspekt der Erfindung betrifft ein computerlesbares Medium, welches einen Computerprogrammcode zum Durchführen eines in den vorhergehenden Abschnitten beschriebenen Verfahrens zum Betreiben eines Antriebsstrangs in einem Kraftfahrzeug aufweist. Unter dem Begriff "computerlesbares Medium" sind dabei insbesondere, aber nicht ausschließlich, Festplatten und/oder Server und/oder Memorysticks und/oder Flash-Speicher und/oder DVDs und/oder Bluerays und/oder CDs zu verstehen. Zusätzlich ist unter dem Begriff "computerlesbares Medium" auch ein Datenstrom zu verstehen, wie er beispielsweise entsteht, wenn ein Computerprogramm und/oder ein Computerprogrammprodukt aus dem Internet heruntergeladen werden.

Ein weiterer Teilaspekt der Erfindung betrifft ein Steuergerät für einen Verbrennungsmotor, wobei das Steuergerät dazu eingerichtet ist, ein in den vorhergehenden Abschnitten beschriebenes Verfahren zur Ermittlung einer Rußbeladung eines Partikelfilters in der Abgasanlage des Verbrennungsmotors auszuführen, wenn ein Computerprogrammcode durch das Steuergerät ausgeführt wird. Da ein solches Steuergerät zur Steuerung des Verbrennungsmotors und die benötigten Sensoren vorhanden sind, kann das Verfahren durch einmaligen Programmierungsaufwand ohne zusätzliche Hardware quasi kostenneutral umgesetzt werden.

Ein weiterer Aspekt der Erfindung betrifft einen Verbrennungsmotor mit einer Abgasanlage, in welcher ein Partikelfilter angeordnet ist, sowie mit einem in dem vorhergehenden Abschnitt beschriebenen Steuergerät. Bei einem solchen Verbrennungsmotor wird die Abgasnachbehandlung optimiert, da eine verbesserte Steuerung der Regeneration des Partikelfilters möglich ist. Da unnötige Regenerationsvorgänge durch das Verfahren vermieden werden, können die Effizienz des Verbrennungsmotors verbessert und der Kraftstoffverbrauch sowie die Emissionen verringert werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erstes bevorzugtes Ausführungsbeispiel für einen Verbrennungsmotor mit einer Abgasanlage, in welcher ein Partikelfilter angeordnet ist,
- Figur 2: ein weiteres bevorzugtes Ausführungsbeispiel für einen Verbrennungsmotor mit einer Abgasanlage, in welcher ein Partikelfilter angeordnet ist,
- Figur 3: ein Kraftfahrzeug mit einem Verbrennungsmotor und einer Abgasanlage, und
- Figur 4: ein Ablaufdiagramm zur Durchführung eines erfindungsgemäßen Verfahrens zur Ermittlung einer Aschebeladung eines Partikelfilters in der Abgasanlage eines Verbrennungsmotors.

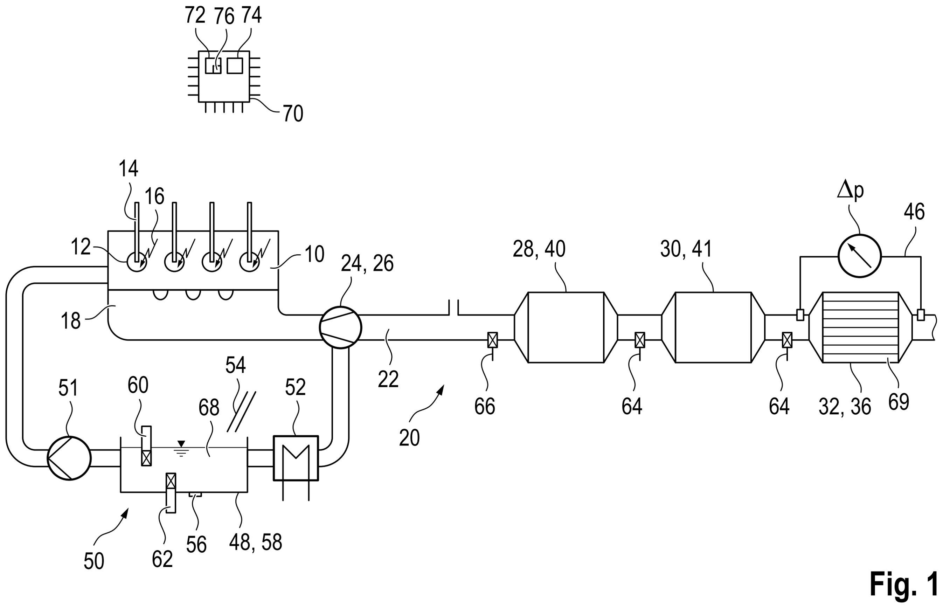

Figur 1 zeigt ein erstes Ausführungsbeispiel für einen Verbrennungsmotor 10 mit mindestens einem Brennraum 12, wobei an dem Brennraum 12 ein Kraftstoffinjektor 14 und eine Zündkerze 16 zur Zündung eines zündfähigen Kraftstoff-Luft-Gemischs angeordnet sind. Der Verbrennungsmotor 10 ist als direkteinspritzender Ottomotor ausgeführt. Alternativ kann der Verbrennungsmotor 10 auch als Verbrennungsmotor 10 mit einer Gemischbildung im Ansaugtrakt oder einer Kombination aus Gemischbildung im Ansaugtrakt und im Brennraum 12 ausgeführt sein. Der Verbrennungsmotor 10 ist mit seinem Auslass 18 mit einer Abgasanlage 20 verbunden, welche einen Abgaskanal 22 aufweist. In der Abgasanlage 20 sind in Strömungsrichtung eines Abgasstroms durch die Abgasanlage 20 eine Turbine 26 eines Abgasturboladers 24 und stromabwärts der Turbine 26 eine erste Abgasnachbehandlungskomponente 28, weiter stromabwärts eine zweite Abgasnachbehandlungskomponente 30 und noch weiter stromabwärts eine dritte Abgasnachbehandlungskomponente 32 angeordnet. In dem in Figur 1 dargestellten Ausführungsbeispiel ist die erste Abgasnachbehandlungskomponente 28 ein erster Drei-Wege-Katalysator 40, die zweite Abgasnachbehandlungskomponente 30 ein zweiter Drei-Wege-Katalysator 41 und die dritte Abgasnachbehandlungskomponente 32 ein Partikelfilter 36. Alternativ kann der Partikelfilter 36 auch stromabwärts des ersten Drei-Wege-Katalysators 40 und stromaufwärts des zweiten Drei-Wege-Katalysator 41 angeordnet sein.

Die Abgasanlage 20 umfasst einen Differenzdrucksensor 46, über welchen ein Druckdifferenz über den Partikelfilter 36 bestimmt werden kann. Ferner kann die Abgasanlage 20 weitere Sensoren, insbesondere einen Temperatursensor 64 oder einen Abgassensor 66, aufweisen, um die Abgasnachbehandlung des Verbrennungsmotors 10 zu steuern.

Der Verbrennungsmotor 10 weist einen Ölkreislauf 50 auf, in welchem ein Öl 68 zur Schmierung von Komponenten des Verbrennungsmotors 10 zirkuliert. Der Ölkreislauf 50 umfasst einen Vorratsbehälter 48 zur Bevorratung des Öls 68 und eine Ölpumpe 51, um das Öl 68 im Ölkreislauf 50 zu fördern. Der Vorratsbehälter 48 kann insbesondere in Form einer Ölwanne 58 ausgebildet sein. Der Ölkreislauf 50 umfasst ferner einen Ölkühler 52. An dem Vorratsbehälter 48 ist eine Ölablassschraube 56 vorgesehen, um altes Öl 68 aus dem Ölkreislauf 50 abzulassen. Ferner ist an dem Ölkreislauf 50 ein Einfüllstutzen 54 vorgesehen, um frisches Öl 68 nachzufüllen. Ferner umfasst der Ölkreislauf einen Ölstandsensor 60, um eine Menge des im Ölkreislauf 50 vorhandenen Öls 68 zu messen. Der Ölkreislauf 50 kann ferner einen Ölqualitätssensor 62 aufweisen, um die Qualität des Öls 68 zu bewerten. Dadurch kann beispielsweise ein Ölwechsel vorgeschlagen werden, wenn das Öl 68 nicht mehr die ursprüngliche Qualität aufweist.

Der Verbrennungsmotor 10 steht mit einem Steuergerät 70 in Wirkverbindung, welches eine Speichereinheit 72 und eine Recheneinheit 74 umfasst. **In** der Speichereinheit 72 ist ein Computerprogrammcode 76 abgelegt, welcher ein Verfahren zum Betreiben des Verbrennungsmotors 10 steuert, wenn der Computerprogrammcode 76 durch die Recheneinheit 74 des Steuergeräts 70 ausgeführt wird.

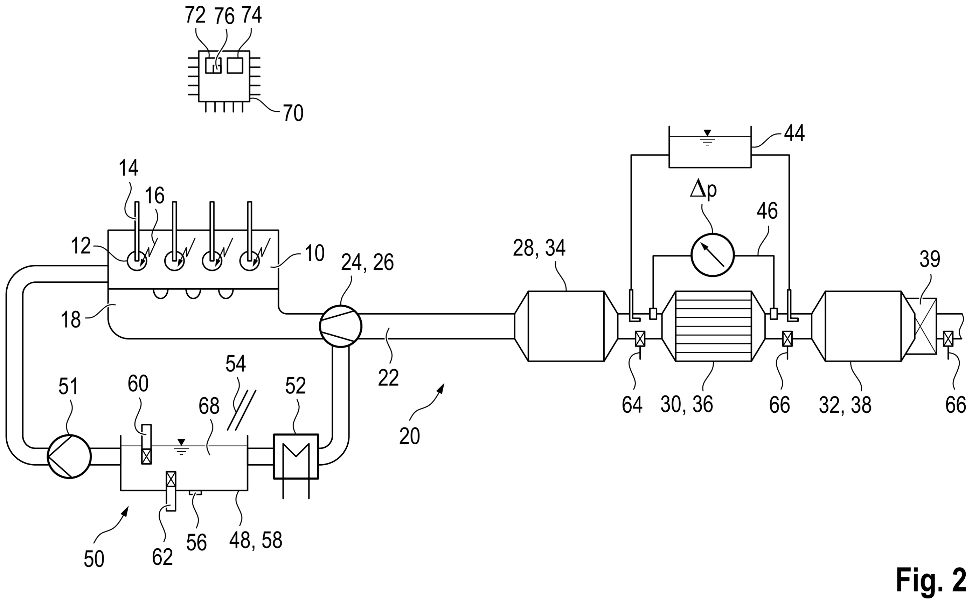

In Figur 2 ist eine alternative Ausführung eines Verbrennungsmotors 10 mit einer Abgasanlage dargestellt. Der Verbrennungsmotor 10 ist als ein direkteinspritzender Dieselmotor ausgeführt und weist mehrere Brennräume 12 auf. An den Brennräumen 12 ist jeweils ein Kraftstoffinjektor 14 zur Einspritzung eines Kraftstoffes in den jeweiligen Brennraum 12 angeordnet. Der Verbrennungsmotor 10 weist einen Einlass auf, über welchen der Brennraum 12 mit einem Ansaugtrakt des Verbrennungsmotors 10 verbunden ist und durch welchen Frischluft in die Brennräume 12 des Verbrennungsmotors strömen kann. Der Verbrennungsmotor 10 weist ferner einen Auslass 18 auf, welcher mit einer Abgasanlage 20 des Verbrennungsmotors 10 verbunden ist.

Die Abgasanlage 20 umfasst einen Abgaskanal 22, in welchem in Strömungsrichtung eines Abgases des Verbrennungsmotors 10 durch den Abgaskanal 22 eine Turbine 26 eines Abgasturboladers 24 angeordnet ist, welche einen nicht dargestellten, im Ansaugtrakt des Verbrennungsmotors 10 angeordneten Verdichter über eine Welle antreibt. Der Abgasturbolader 24 ist vorzugsweise als Abgasturbolader 24 mit variabler Turbinengeometrie ausgeführt. Dazu sind einem Turbinenrad der Turbine 26 verstellbare Leitschaufeln vorgeschaltet, über welche die Anströmung des Abgases auf die Schaufeln der Turbine 26 variiert werden kann. Stromabwärts der Turbine 26 sind in dem Abgaskanal 22 der Abgasanlage 20 mehrere Abgasnachbehandlungskomponenten 28, 30, 32 vorgesehen. Dabei ist unmittelbar stromabwärts der Turbine 26 als erste Abgasnachbehandlungskomponente 28 ein Oxidationskatalysator 34 oder ein NOₓ-Speicherkatalysator angeordnet. Stromabwärts des Oxidationskatalysators 34 oder des NOₓ-Speicherkatalysators ist ein Partikelfilter 36 mit einer Beschichtung zur selektiven katalytischen Reduktion von Stickoxiden (SCR-Beschichtung), angeordnet. Stromabwärts des Partikelfilters 36 mit der Beschichtung zur selektiven katalytischen Reduktion von Stickoxiden können weitere Abgasnachbehandlungskomponenten, insbesondere ein weiterer SCR-Katalysator 38 und/oder ein Ammoniak-Sperrkatalysator 39 angeordnet sein. Ferner ist an der Abgasanlage 20 mindestens ein Dosierelement 42 angeordnet, um eine wässrige Harnstofflösung in den Abgaskanal 22 der Abgasanlage 20 einzudosieren. Die wässrige Harnstofflösung ist in einem Vorratsbehälter 44 bevorratet.

Die Abgasanlage 20 umfasst einen Differenzdrucksensor 46, über welchen eine Druckdifferenz über den Partikelfilter 36 bestimmt werden kann. Ferner kann die Abgasanlage 20 weitere Sensoren, insbesondere einen Temperatursensor 64 oder einen Abgassensor 66, aufweisen, um die Abgasnachbehandlung des Verbrennungsmotors 10 zu steuern.

Der Verbrennungsmotor 10 weist einen Ölkreislauf 50 auf, in welchem ein Öl 68 zur Schmierung von Komponenten des Verbrennungsmotors 10 zirkuliert. Der Ölkreislauf 50 umfasst einen Vorratsbehälter 48 zur Bevorratung des Öls 68. Der Vorratsbehälter 48 kann insbesondere in Form einer Ölwanne 58 ausgebildet sein. Der Ölkreislauf 50 umfasst ferner einen Ölkühler 52. An dem Vorratsbehälter 48 ist eine Ölablassschraube 56 vorgesehen, um altes Öl 68 aus dem Ölkreislauf 50 abzulassen. Ferner ist an dem Ölkreislauf 50 ein Einfüllstutzen 54 vorgesehen, um frisches Öl 68 nachzufüllen. Ferner umfasst der Ölkreislauf einen Ölstandsensor 60, um eine Menge des im Ölkreislauf 50 vorhandenen Öls 68 zu messen. Der Ölkreislauf 50 kann ferner einen Ölqualitätssensor 62 aufweisen, um die Qualität des Öls 68 zu bewerten. Dadurch kann beispielsweise ein Ölwechsel vorgeschlagen werden, wenn das Öl 68 nicht mehr die ursprüngliche Qualität aufweist.

Der Verbrennungsmotor 10 steht mit einem Steuergerät 70 in Wirkverbindung, welches eine Speichereinheit 72 und eine Recheneinheit 74 umfasst. In der Speichereinheit 72 ist ein Computerprogrammcode 76 abgelegt, welcher ein Verfahren zum Betreiben des Verbrennungsmotors 10 steuert, wenn der Computerprogrammcode 76 durch die Recheneinheit 74 des Steuergeräts 70 ausgeführt wird.

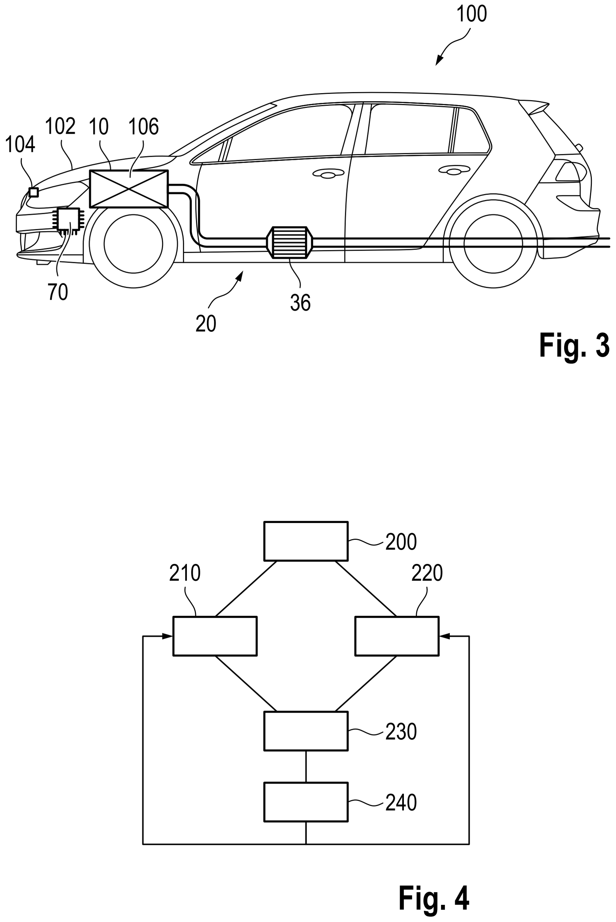

In Figur 3 ist ein Kraftfahrzeug 100 mit einem Verbrennungsmotor 10 und einer an den Verbrennungsmotor 10 angeschlossenen Abgasanlage 20 dargestellt. Bei einem Kraftfahrzeug 100 kann es sich dabei prinzipiell um jedwedes Mittel zur Beförderung zu Lande, zu Wasser und/oder in der Luft handeln, beispielsweise PKW, LKW, Busse, autonom fahrende Personen- oder Lasttransporter, Einsatzfahrzeuge, Arbeitsfahrzeuge (zum Beispiel Gabelstapler), Baustellenfahrzeuge wie Betonmischer, Bagger oder dergleichen, Fluggeräte wie beispielsweise Flugzeuge, Lokomotiven, Triebwagen, Hubschrauber, Drohnen, Flugtaxis oder dergleichen und/oder Boote oder Schiffe, aber auch motorisierte Zweiräder wie Motorräder. In Figur 3 ist exemplarisch für ein Kraftfahrzeug 100 ein Personenkraftfahrzeug dargestellt.

Das Kraftfahrzeug 100 weist eine Motorhaube 102 auf, um einen Zugang zu einem Motorraum 106 freizugeben, in welchem der Verbrennungsmotor 10 und der Einfüllstutzen 54 für den Ölkreislauf angeordnet sind. An der Motorhaube 102 ist ein Motorhauben-Öffnungssensor 104 vorgesehen, um ein Öffnen der Motorhaube 102 zu erkennen.

Das Kraftfahrzeug 100 umfasst ferner einen Verbrennungsmotor 10, welcher mit seinem Auslass 18 mit einer Abgasanlage 20 verbunden ist. In der Abgasanlage 20 sind mehrere Abgasnachbehandlungskomponenten 28, 30, 32 vorgesehen. Die Abgasanlage 20 umfasst zumindest einen Partikelfilter 36, in welchem bei der unvollständigen Verbrennung von Kraftstoff in den Brennräumen 12 des Verbrennungsmotors 10 auftretende Partikel aus einem Abgasstrom des Verbrennungsmotors 10 herausgefiltert werden.

Der Verbrennungsmotor 10 weist einen Ölkreislauf 50 auf, welcher eine Schmierung des Verbrennungsmotors und gegebenenfalls eines vorhandenen Abgasturboladers 24 sicherstellt.

In Figur 4 ist ein Ablaufdiagramm zur Durchführung eines erfindungsgemäßen Verfahrens zur Ermittlung einer Aschebeladung eines Partikelfilters 36 in einer Abgasanlage 20 eines Verbrennungsmotors 10 dargestellt. In einem Verfahrensschritt <200> wird ein Abgasgegendruck p_{R} in der Abgasanlage 20 bei einem leeren, neuwertigen Partikelfilter 36 als Referenzwert RW ermittelt. Ein solcher Referenzwert kann entweder individuell für jeden neuen Partikelfilter 36 in einem Kraftfahrzeug 100 an einem Prüfstand ermittelt und entsprechend für neuwertige Partikelfilter 36 eine bestimmte Spezifikation hinterlegt werden.

In einem Verfahrensschritt <210> wird der Partikelfilter 36 während eines Betriebs des Verbrennungsmotors 100 mit Rußpartikeln beladen. Eine solche Beladung wird in dem Verfahrensschritt <210> aus den Betriebsparametern des Verbrennungsmotors durch ein Rußbeladungsmodell für den Partikelfilter 36 ermittelt.

In einem parallelen Verfahrensschritt <220> wird zusätzlich ein Eintrag von Ölasche 69 in den Partikelfilter 36 anhand eines ermittelten Ölverbrauchs des Verbrennungsmotors 10 ermittelt. Während ein Großteil des Öls 69 verbrennt, verbleiben Aschereste aus Motoröladditiven, welche in den Abgasstrom des Verbrennungsmotors 10 gelangen. Dabei wird die Ölasche 69 in dem Partikelfilter 36 aus dem Abgasstrom des Verbrennungsmotors 10 herausgefiltert. Im Gegensatz zu den Rußpartikeln kann diese Ölasche 69 jedoch nicht weiter oxidiert werden und verbleibt bei einer Regeneration des Partikelfilters 36 in diesem.

In einem Verfahrensschritt <230> erfolgt eine Regeneration des Partikelfilters 36, wenn eine Notwendigkeit zur Regeneration des Partikelfilters 36 erkannt wird. Eine solche Notwendigkeit kann durch ein Rußbeladungsmodell und/oder durch ein Messung einer Druckdifferenz Δp für den Partikelfilter 36 erkannt werden.

In einem Verfahrensschritt <240> erfolgt dann eine Anpassung des Referenzwertes RW zu einem modifizierten Referenzwert RW_{mod}, für einen leeren, also vollständig regenerierten Partikelfilter 36 in einem Differenzdruckmodell und/oder einem Aschemodell für den Partikelfilter 36 in Abhängigkeit von dem ermittelten Ölverbrauch des Verbrennungsmotors 10 und/oder in Abhängigkeit von dem ermittelten Eintrag von Ölasche 69 in den Partikelfilter 36.

### Bezugszeichenliste

- 10: Verbrennungsmotor
- 12: Brennraum
- 14: Kraftstoffinjektor
- 16: Zündkerze
- 18: Auslass

- 20: Abgasanlage
- 22: Abgaskanal
- 24: Abgasturbolader
- 26: Turbine
- 28: erste Abgasnachbehandlungskomponente

- 30: zweite Abgasnachbehandlungskomponente
- 32: dritte Abgasnachbehandlungskomponente
- 34: Oxidationskatalysator
- 36: Partikelfilter
- 38: SCR-Katalysator
- 39: Ammoniak-Sperrkatalysator

- 40: Drei-Wege-Katalysator
- 41: Drei-Wege-Katalysator
- 42: Dosierelement
- 44: Vorratsbehälter
- 46: Differenzdrucksensor
- 48: Vorratsbehälter

- 50: Ölkreislauf
- 51: Ölpumpe
- 52: Ölkühler
- 54: Einfüllstutzen
- 56: Ölablassschraube
- 58: Ölwanne

- 60: Ölstandsensor
- 62: Ölqualitätssensor
- 64: Temperatursensor
- 66: Abgassensor
- 68: Öl
- 69: Ölasche

- 70: Steuergerät
- 72: Speichereinheit
- 74: Recheneinheit
- 76: Computerprogrammcode

- 100: Kraftfahrzeug
- 102: Motorhaube
- 104: Motorhauben-Öffnungssensor
- 106: Motorraum

- 200: erster Verfahrensschritt
- 210: zweiter Verfahrensschritt
- 220: dritter Verfahrensschritt
- 230: vierter Verfahrensschritt
- 240: fünfter Verfahrensschritt

- p_{R}: Referenzdruck/ Abgasgegendruck
- p_{R1}: unterer Referenzdruck
- p_{R2}: oberer Referenzdruck
- Δp: Differenzdruck
- RW: Referenzwert
- RW_{mod}: modifizierter Referenzwert

## Patentansprüche

1. Verfahren zur Ermittlung einer Aschebeladung eines Partikelfilters (36) in einer Abgasanlage (20) eines Verbrennungsmotors (10), umfassend folgende Verfahrensschritte:
- Ermitteln eines Abgasgegendrucks (p_{R}) bei einem leeren, neuwertigen Partikelfilter (36) als Referenzwert (RW),
- Ermitteln eines Partikeleintrags in den Partikelfilter (36) aus Betriebsparametern des Verbrennungsmotors (10) durch ein Rußpartikelbildungsmodell,
- Ermitteln eines Eintrags von Ölasche (69) aus einem ermittelten Ölverbrauch des Verbrennungsmotors (10) durch ein Aschemodell,
- Regenerieren des Partikelfilters (36), wenn eine Notwendigkeit zur Regeneration des Partikelfilters (36) durch einen gemessenen Differenzdruck (Δp) über den Partikelfilter (36) und/oder durch ein Beladungsmodell des Partikelfilters (36) erkannt wird,
- Anpassen des Referenzwerts (RW) für den Abgasgegendruck (p_{R}) für den leeren Partikelfilter in einem Differenzdruckmodell und/oder einem Aschemodell für den Partikelfilter (36) in Abhängigkeit von dem ermittelten Ölverbrauch des Verbrennungsmotors (10).

2. Verfahren nach Anspruch 1, wobei die Ermittlung des Ölverbrauchs des Verbrennungsmotors (10) über einen Ölstandsensor (60) in einem Vorratsbehälter (48) zur Bevorratung eines Öls (68) zur Schmierung des Verbrennungsmotors (10) erfolgt.

3. Verfahren nach Anspruch 1 oder 2, wobei das Aschemodell für den Partikelfilter (36) einen linearen Zusammenhang zwischen einem Ölverbrauch des Verbrennungsmotors (10) und einem Eintrag von Ölasche (69) in den Partikelfilter (36) aufweist.

4. Verfahren nach einem der Ansprüche 1 bis 3, wobei das Differenzdruckmodell für den Partikelfilter (36) einen unteren Referenzdruck (p_{R1}) für einen unbeladenen Partikelfilter (36) und einen oberen Referenzdruck (p_{R2}) für eine Einleitung einer Regeneration des Partikelfilters (36) aufweist.

5. Verfahren nach Anspruch 4, wobei der untere Referenzdruck (p_{R1}) in Abhängigkeit des ermittelten Ölverbrauchs des Verbrennungsmotors (10) und/oder des ermittelten Eintrags von Ölasche (69) in den Partikelfilter (36) angepasst wird.

6. Verfahren nach einem der Ansprüche 1 bis 5, wobei ein Ölverbrauch aus einer nachgefüllten Ölmenge bei einem Nachfüllvorgang oder einem Ölwechselvorgang des Öls (68) des Verbrennungsmotors (10) ermittelt wird.

7. Verfahren nach Anspruch 6, wobei ein Nachfüllvorgang des Öls (68) erkannt wird, wenn ein Motorhauben-Öffnungssensor (104) ein Öffnen einer Motorhaube (102) eines Kraftfahrzeugs (100) zum Zwecke eines Nachfüllens des Öls (68) detektiert.

8. Computerprogrammcode (76), umfassend Befehle, die bei der Ausführung des Computerprogrammcodes (76) durch einen Computer diesen veranlassen, ein Verfahren nach einem der Ansprüche 1 bis 7 auszuführen.

9. Steuergerät (70) für einen Verbrennungsmotor (10), wobei das Steuergerät (70) dazu eingerichtet ist, ein Verfahren nach einem der Ansprüche 1 bis 7 auszuführen, wenn ein Computerprogrammcode (76) durch das Steuergerät (70) ausgeführt wird.

10. Verbrennungsmotor (10) mit einer Abgasanlage (20) sowie einem Steuergerät (70) nach Anspruch 9.
